# EUROPÄISCHE PATENTSCHRIFT

(11) **EP 1 685 918 B1**
(45) Veröffentlichungstag und Bekanntmachung des Hinweises auf die Patenterteilung: **26.11.2008**
(21) Anmeldenummer: 05000961.2
(22) Anmeldetag: 19.01.2005
(51) Int. Cl.: B23G 5/06, B23G 7/02

(54) **Gewindeformer oder-bohrer**
Thread former or tap
Outil de formage de filet ou taraud

(43) Veröffentlichungstag der Anmeldung: 02.08.2006
(73) Patentinhaber: Fette GmbH, 21493 Schwarzenbek (DE)
(72) Erfinder: Gutsche, Christian, D-21465 Wentorf (DE); Müller, Wolfgang, D-21493 Schwarzenbek (DE); Dehn, Gerhard, D-23879 Mölln (DE)
(74) Vertreter: Hauck Patent- und Rechtsanwälte

(56) Entgegenhaltungen:
- EP-A- 0 734 803
- WO-A-03/011508
- US-A- 2 325 627
- US-A- 6 146 060

## Beschreibung

Die Erfindung bezieht sich auf einen Gewindeformer oder -bohrer nach dem Oberbegriff des Patentanspruchs 1.

Aus WO 03/011508 ist ein Gewindeformer oder -bohrer bekannt geworden, bei dem ein separates Profilelement lösbar an einem Schaft anbringbar ist. Schaft und Profilelement haben auf den einander zugekehrten Seiten Vorsprünge und/oder Vertiefungen, die formschlüssig so ineinander greifen, daß eine automatische Zentrierung des Profilelements am Schaft erfolgt, wenn beide Teile axial gegeneinander gespannt werden. Dies geschieht mit Hilfe einer Schraube, welche durch eine Bohrung im Profilelement geführt und in eine Innengewindebohrung des Schaftes eingeschraubt wird.

Bei dem bekannten Werkzeug kann der Schaft in herkömmlicher Weise und mit herkömmlichen Abmessungen aus einem hoch belastbaren Material, insbesondere einem geeigneten Stahl, gefertigt werden. Er braucht bei Verschleiß des Profilelements nicht fortgeworfen zu werden. Dadurch kann eine bereitgestellte Mehrzahl unterschiedlicher Profilelemente mit unterschiedlichem Durchmesser, unterschiedlicher Steigung usw. mit einem Einheitsschaft verbunden werden. Das Profilelement kann aus einem geeigneten harten Werkstoff bestehen. Der Materialeinsatz hierfür ist naturgemäß signifikant geringer als bei herkömmlichen Werkzeugen. Zur Übertragung des Drehmoments vom Schaft auf das Profilelement sind die Vertiefungen und die Vorsprünge vorgesehen, die formschlüssig ineinandergreifen und zugleich eine Zentrierung bewirken.

Insbesondere bei kleineren Durchmessern wird das Profilelement durch die Bohrung für die Befestigungsschraube geschwächt. Ferner ist zu berücksichtigen, daß sehr hartes Material, wie z.B. Hartmetall, recht schwer bearbeitbar ist. Andererseits muß für die Ausbildung der Vertiefungen und Vorsprünge für den formschlüssigen Eingriff mit einem komplementären Kupplungsabschnitt des Schaftes eine präzise Bearbeitung vorgenommen werden. Außerdem entstehen im Bereich der Kupplungsabschnitte erhebliche Kräfte bei der Übertragung des Drehmoments vom Schaft auf das Profilelement, was bei nicht besonders zähem Werkstoff zu einer Rißbildung führen kann. Ferner wird die Schraube erheblich auf Zug belastet.

Aus EP 0 734 803 A2 ist ein Schaftwerkzeug bekannt geworden, mit einem länglichen Schaft, der axial durchbohrt ist und einen Einspannabschnitt aufweist. Ein separates Profilelement von geringerer Länge, das einen Schneidprofilabschnitt aufweist, ist an einem Ende mit einem Ansatz versehen, der in einen erweiterten Bohrungsabschnitt des zugekehrten Schaftendes einsteckbar ist. Profilelement und Ansatz sind mit einer Bohrung versehen, und durch den axialen Kanal des Schaftes erstreckt sich eine Zugstange, die mit dem Profilelement zusammenwirkt, um das Profilelement fest gegen den Schaft anzuziehen. Das Drehmoment wird durch den Ansatz übertragen, der z.B. unrund ist.

Der Erfindung liegt die Aufgabe zugrunde, die bei dem bekannten Gewindeformer oder -bohrer auftretenden Nachteile zu beheben und einen Gewindeformer oder -bohrer zu schaffen, der ein formstabiles Profilelement aufweist.

Diese Aufgabe wird durch die Merkmale des Patentanspruchs 1 gelöst.

Bei dem erfindungsgemäßen Gewindeformer oder -bohrer weist das Profilelement an dem dem Schaft zugekehrten Ende einen axialen Ansatz auf, der eine zum freien Ende hin offene axiale Bohrung aufweist. Die Vorsprünge und/oder Vertiefungen, die sonst auf der dem Schaft zugewandten Seite des Profilelements vorgesehen sind, sind nunmehr am axialen Ansatz vorgesehen. Der Schaft weist eine axiale Durchbohrung auf, und die Befestigungsvorrichtung ist innerhalb der Durchbohrung axial festlegbar. Nur der axiale Ansatz weist eine Bohrung auf, und der Ansatz ist aus einem weicheren und zäheren Werkstoff als das Profilelement und mechanisch bearbeitbar. Die Befestigungsvorrichtung wirkt mit der axialen Bohrung im Ansatz so zusammen, daß die Teile axial fest gegeneinander gespannt werden können.

Bei der Erfindung ist das Profilelement vollständig massiv, d.h. kann ohne Bohrung ausgeführt sein und kann daher in höherem Maße Kräfte aufnehmen, ohne überbeansprucht zu werden, wie dies bei dem herkömmlichen Gewindeformer oder -bohrer unter Umständen der Fall ist.

Nach einer Ausgestaltung der Erfindung weist die Durchbohrung nahe dem Ansatz eine Schulter auf. Mit der Schulter kann ein geeignetes Befestigungselement zusammenwirken, um bei Betätigung auf den Ansatz eine axiale Kraft auszuüben, durch welche die Kupplungsabschnitte von Ansatz und Schaft gegeneinander gespannt werden. Ein derartiges Befestigungselement kann z.B. bajonettartig mit der Öffnung im axialen Ansatz zusammenwirken, wobei z.B. Rampenflächen am Befestigungselement mit Rampenflächen des Ansatzes zusammenwirken, um bei Verdrehung des Befestigungselements eine axiale Zugkraft zu erzeugen.

Alternativ kann der Ansatz eine Innengewindebohrung aufweisen zur Aufnahme einer Schraube, die von der Durchbohrung des Schaftes her eingeschraubt wird. Der Kopf einer solchen Befestigungsschraube, der mit vorzugsweise einer Schulter in der Durchbohrung zusammenwirkt, kann beliebig lang ausgeführt werden, um hohe Zugkräfte aufzunehmen. Vorzugsweise ist die Unterseite des Kopfes mit einem konischen Abschnitt versehen, der mit einem komplementären konischen Abschnitt der Schulter zusammenwirkt.

Es ist denkbar, Profilelement und Ansatz aus gleichem Material herzustellen, beispielsweise im Sinterverfahren. Bevorzugt ist jedoch eine Ausbildung derart, daß Profilelement einerseits und axialer Ansatz andererseits aus unterschiedlichen Werkstoffen bestehen. Zur Erhöhung der Standfestigkeit wird ein Profilelement aus sehr hartem Material, beispielsweise Hartmetall, bevorzugt. Der Ansatz kann aus einem zäheren weicheren Material geformt sein, was eine Rißbildung im Kupplungsbereich vermeidet und eine bessere Bearbeitungsmöglichkeit sicherstellt. Die Ausbildung mit zwei Werkstoffen kann z.B. dadurch erfolgen, daß ein Preßling für ein Sinterverfahren zweischichtig hergestellt wird, wobei die eine Schicht das Profilelement und die andere den axialen Ansatz bildet. Alternativ können getrennte Teile aus unterschiedlichem Material geformt werden, die anschließend durch ein geeignetes Verbindungsverfahren miteinander verbunden werden, beispielsweise durch Schweißen, Löten, Kleben oder dergleichen.

In der bereits eingangs erwähnten WO 03/011508 sind verschiedene Mittel beschrieben, um eine Drehmomentübertragung über die separaten Teile zu erzielen bei gleichzeitiger Zentrierung, wenn sie axial gegeneinander gespannt werden. Eine besonders vorteilhafte Ausgestaltung der Erfindung sieht hierzu vor, eine Planhub-oder Kronenrandverzahnung vorzusehen. Die selbstzentrierende Kupplung ermöglicht die Übertragung größter Drehmomente auf kleinstem Raum. Zu Zentrierzwecken verlaufen die Scheitel der Zähne bzw. ihre Lücken im Längsschnitt nicht im rechten Winkel zur Achse, sondern geneigt dazu, um die selbstzentrierende Wirkung zu erhalten. Bei Kurbelwellen oder Getriebebrücken ist eine derartige Kupplung an sich bereits bekannt geworden.

Die Erfindung wird nachfolgend anhand von Zeichnungen näher erläutert.
- Fig. 1: zeigt im Schnitt ein Werkzeug nach der Erfindung.
- Fig. 2: zeigt im Schnitt vergrößert das vordere Ende des Werkzeugs nach Fig. 1.

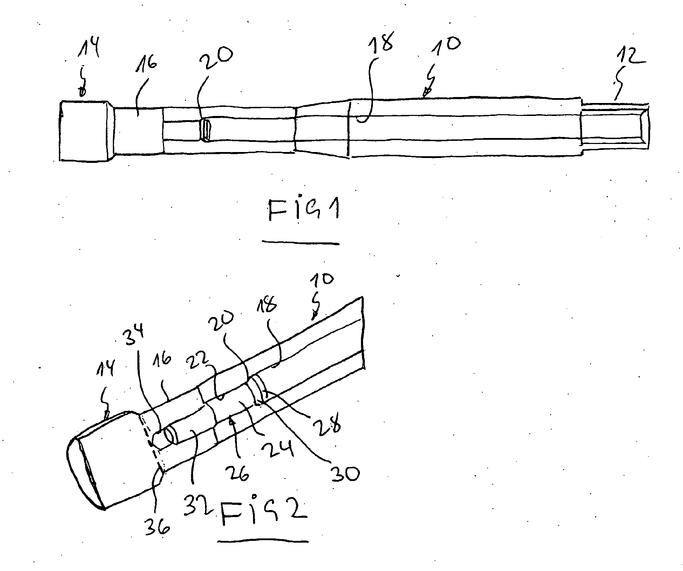

In Fig. 1 und 2 ist ein Werkzeugschaft 10 dargestellt, der an einem Ende einen Einspannabschnitt 12 aufweist und am anderen Ende einen nicht weiter dargestellten Kupplungsabschnitt. In den Fign. 1 und 2 ist ferner ein Formprofilelement 14 dargestellt, das am linken Ende einen Anformkegel sowie am Umfang ein Gewindeprofil aufweist, das jedoch nicht dargestellt ist. Es dient zur Herstellung eines Innengewindes nach den Gewindefurch- oder -formverfahren. Der Umfang des Formprofilelements 14 ist z.B. polygonal, was ebenfalls nicht zu erkennen ist. Das Formprofilelement 14 besteht z.B. aus Hartmetall. Am linken Ende schließt sich an das Formprofilelement 14 ein axialer zylindrischer Ansatz 16 an, der einen etwas kleineren Durchmesser als das Formprofilelement 14 aufweist. Am freien Ende weist der Ansatz 16 ebenfalls einen Kupplungsabschnitt auf. Die Kupplungsabschnitte von Schaft 10 und Ansatz 16 können z.B. in einer Weise gebildet sein, wie dies in WO 03/011508 dargestellt ist. Alternativ kann auch eine Verzahnung vorgesehen sein, beispielsweise eine Kronenrandverzahnung, welche zugleich eine Zentrierung der beiden Teile bewerkstelligt.

Der Schaft 10 weist eine axiale Durchbohrung 18 auf, die nahe dem linken dem Ansatz 16 zugekehrten Ende eine Ringschulter 20 aufweist. Nach der konischen Ringschulter verengt sich die Durchbohrung zu einem etwas im Durchmesser kleineren Bohrungsabschnitt 22. Dieser Bohrungsabschnitt nimmt einen gewindefreien Schaftabschnitt 24 einer Befestigungsschraube 26 auf mit einem Kopf 28. Der Kopf 28 hat an der Unterseite einen konischen Abschnitt 30, der mit der komplementären Ringschulter 20 zusammenwirkt. Ein Gewindeabschnitt 32 der Schraube 26 ist in eine Gewindebohrung 34 des Ansatzes 16 eingeschraubt. Sowohl Durchbohrung 18 als auch Gewindebohrung 34 sind axial und beim Zusammenspannen von Schaft 10 und Formelement 14 koaxial. Der Schraubenkopf 28 besitzt einen Kreuzschlitz oder dergleichen zur Verstellung vom Einspannende 12 her. Mit Hilfe der Schraube 26 können die Teile 14, 16 und 10 axial fest gegeneinander gespannt werden, wobei die Kupplungsabschnitte dafür sorgen, daß eine wirksame Drehmomentübertragung möglich ist sowie eine genaue Zentrierung dieser Teile.

Das Formelement 14 wird aus sehr hartem Material, beispielsweise Hartmetall, hergestellt, das bekanntlich schwer bearbeitbar und wenig zäh ist. Der Werkstoff für den Ansatz 16 sollte weicher und zäher sein, um eine Rißbildung zu vermeiden und zugleich auch eine bessere Bearbeitungsmöglichkeit zu bieten. Die Zweiteiligkeit ist in Fig. 2 durch die gestrichelte Linie 36 angedeutet.

Bei getrennten Werkstoffen können die Teile 14, 16 im Sinterverfahren hergestellt werden, indem ein zweischichtiger Preßling hergestellt wird. Alternativ können die Teile 14, 16 separat gefertigt und anschließend durch Schweißung, Klebung oder Lötung miteinander verbunden werden.

## Patentansprüche

1. Gewindeformer, oder -bohrer mit einem Schaft (10), der an einem Ende einen Einspannabschnitt (12) aufweist und unit einem separaten Profilelement (14), das mittels einer Befestigungsvorrichtung zentrisch und unverdrehbar befestigbar ist, wobei das Profilelement (14) eine geringe axiale Länge und außen einen Einlauf- bzw. Anschnittkegel und einen Form-oder Schneidprofilabschnitt aufweist, und wobei am Ende des Schaftes (10) und auf der dem Schaft (10) zugekehrten Seite des Profilelements (14) Vorsprünge und/oder Vertiefungen geformt sind, die formschlüssig so ineinandergreifen, daß eine automatische Zentrierung des Profilelements (14) am Schaft (10) erfolgt, **dadurch gekennzeichnet, daß** das Profilelement (14) vollständig massiv ist und an dem dem Schaft (10) zugekehrten Ende einen axialen Ansatz (16) aufweist, der Ansatz (16) aus einem weicheren und zäheren Werkstoff als das Profilelement (14) besteht und mechanisch bearbeitbar ist, wobei nur der axiale Ansatz (16) eine zum freien Ende hin offene axiale Bohrung (34) aufweist, die Vorsprünge und/oder Vertiefungen am freien Ende des Ansatzes (16) geformt sind, der Schaft (10) eine axiale Durchbohrung (18) aufweist und die Befestigungsvorrichtung innerhalb der Durchbohrung (18) axial festlegbar ist und mit der axialen Bohrung (34) im Ansatz (16) so zusammenwirkt, daß die Teile axial gegeneinander gespannt werden können.

2. Gewindeformer oder -bohrer nach Anspruch 1 **dadurch gekennzeichnet, daß** der Schaft (10) aus einem bezüglich Biegung und Torsion hoch beanspruchbaren Material, insbesondere aus Stahl und das Profilelement (14) aus einem geeigneten Hartstoff besteht.

3. Gewindeformer oder -bohrer nach Anspruch 1 oder 2, **dadurch gekennzeichnet, daß** die Durchbohrung (18) im Schaft (10) nahe dem Ansatz (16) eine Schulter (20) aufweist, mit der ein Befestigungselement zusammenwirkt.

4. Gewindeformer oder -bohrer nach einem der Ansprüche 1 bis 3, **dadurch gekennzeichnet, daß** die Öffnung ein axiales Innengewinde (34) aufweist und in der Durchbohrung (18) des Schaftes (10) eine Schraube (26) angeordnet ist.

5. Gewindeformer oder -bohrer nach Anspruch 4, **dadurch gekennzeichnet, daß** ein Kopf der Schraube (26) an der Unterseite einen konischen Abschnitt (30) aufweist, der mit einem zum konischen Abschnitt (30) komplementären konischen Fläche (20) in der Durchbohrung (18) zusammenwirkt.

6. Gewindeformer oder -bohrer nach einem der Ansprüche 1 bis 5, **dadurch gekennzeichnet, daß** der Ansatz (16) einteilig mit dem Profilelement (14) geformt ist.

7. Gewindeformer oder -bohrer nach einem der Ansprüche 1 bis 5, **dadurch gekennzeichnet, daß** das Profilelement und Ansatz aus einem zweischichtigen Preßling im Sinterverfahren hergestellt sind, wobei für den Ansatz ein anderer Werkstoff verwendet wird als für das Profilelement.

8. Gewindeformer oder -bohrer nach einem der Ansprüche 1 bis 5, **dadurch gekennzeichnet, daß** der Ansatz als separates Teil geformt und durch Schweißung, Lötung oder Klebung mit dem Profilelement fest verbunden ist.

9. Gewindeformer oder -bohrer nach einem der Ansprüche 1 bis 8, **dadurch gekennzeichnet, daß** die Vertiefungen und/oder Vorsprünge von einer Planhub- oder Kronenrandverzahnung gebildet sind.

## Claims

1. Thread former or tap comprising a shaft (10) which at one end has a clamping portion (12) and comprising a separate profile element (14) which may be fastened in a centred and unrotatable manner by means of a fastening device, the profile element (14) having a short axial length and externally having a feed cone and/or chamfer cone and a forming or cutting profile portion, and at the end of the shaft (10) and on the side of the profile element (14) facing the shaft (10) projections and/or recesses being formed, which positively engage in one another such that the profile element (14) is automatically centred on the shaft (10), **characterised in that** the profile element (14) is completely solid and at the end facing the shaft (10) has an axial attachment (16), the attachment (16) consists of a more flexible and tougher material than the profile element (14) and may be machined, only the axial attachment (16) having an axial bore (34) which is open towards the free end, the projections and/or recesses being formed at the free end of the attachment (16), the shaft (10) having an axial through-bore (18) and the fastening device being able to be axially secured inside the through-bore (18) and cooperating with the axial bore (34) in the attachment (16) such that the parts may be axially clamped against one another.

2. Thread former or tap according to Claim 1, **characterised in that** the shaft (10) consists of a highly resistant material as regards flexion and torsion, in particular steel, and the profile element (14) consists of a suitable hard material.

3. Thread former or tap according to Claim 1 or 2, **characterised in that** the through-bore (18) has a shoulder (20) in the shaft (10) in the vicinity of the attachment (16) with which a fastening element cooperates.

4. Thread former or tap according to one of Claims 1 to 3, **characterised in that** the opening has an axial internal thread (34) and a screw (26) is arranged in the through-bore (18) of the shaft (10).

5. Thread former or tap according to Claim 4, **characterised in that** a head of the screw (26) has on the underside a conical portion (30), which cooperates with a conical surface (20) in the through-bore (18) which is complementary to the conical portion (30).

6. Thread former or tap according to one of Claims 1 to 5, **characterised in that** the attachment (16) is formed in one piece with the profile element (14).

7. Thread former or tap according to one of Claims 1 to 5, **characterised in that** the profile element and the attachment are produced from a double-layered pressed part in a sintering process, a different material being used for the attachment than for the profile element.

8. Thread former or tap according to one of Claims 1 to 5, **characterised in that** the attachment is formed as a separate part and is fixedly connected to the profile element by welding, soldering or bonding.

9. Thread former or tap according to one of Claims 1 to 8, **characterised in that** the recesses and/or projections are formed by a face toothing or crown gear toothing.

## Revendications

1. Outil de formage de filet ou taraud avec une tige (10) qui présente à une extrémité une section de serrage (12) et avec un élément profilé (14) indépendant qui peut être fixé de manière centrée et immobilisée en rotation au moyen d'un dispositif de fixation, dans lequel l'élément profilé (14) présente une longueur axiale réduite et extérieurement un cône d'entrée et/ou d'attaque et une section profilée de formage ou de coupe, et dans lequel à l'extrémité de la tige (10) et sur le côté de l'élément profilé (14) faisant face à la tige (10), des saillies et/ou enfoncements sont formés qui engrènent les uns dans les autres par retenue mécanique de telle sorte qu'un centrage automatique de l'élément profilé (14) sur la tige (10) a lieu, **caractérisé en ce que** l'élément profilé (14) est entièrement massif et présente à l'extrémité faisant face à la tige (10) un appendice axial (16), l'appendice (16) est composé d'un matériau plus souple et plus tenace que l'élément profilé (14) et usinable mécaniquement, dans lequel seulement l'appendice axial (16) présente un alésage axial (34) ouvert vers l'extrémité libre, les saillies et/ou enfoncements sont formés à l'extrémité libre de l'appendice (16), la tige (10) présente un perçage axial (18) et le dispositif de fixation peut être fixé axialement à l'intérieur du perçage (18) et coopère avec l'alésage axial (34) dans l'appendice (16) de telle sorte que les pièces peuvent être serrées axialement l'une contre l'autre.

2. Outil de formage de filet ou taraud selon la revendication 1, **caractérisé en ce que** la tige (10) est composée d'un matériau hautement résistant en ce qui concerne la flexion et la torsion, en particulier d'acier, et l'élément profilé (14) d'un matériau approprié à résistance mécanique élevée.

3. Outil de formage de filet ou taraud selon la revendication 1 ou 2, **caractérisé en ce que** le perçage (18) dans la tige (10) présente à proximité de l'appendice (16) un épaulement (20) avec lequel un élément de fixation coopère.

4. Outil de formage de filet ou taraud selon l'une des revendications 1 à 3, **caractérisé en ce que** l'ouverture présente un taraudage axial (34) et une vis (26) est disposée dans le perçage (18) de la tige (10).

5. Outil de formage de filet ou taraud selon la revendication 4, **caractérisé en ce qu'**une tête de la vis (26) présente sur la face inférieure une section conique (30) qui coopère avec une surface conique (20) dans le perçage (18) complémentaire à la section conique (30).

6. Outil de formage de filet ou taraud selon l'une des revendications 1 à 5, **caractérisé en ce que** l'appendice (16) est formé d'une seule pièce avec l'élément profilé (14).

7. Outil de formage de filet ou taraud selon l'une des revendications 1 à 5, **caractérisé en ce que** l'élément profilé et l'appendice sont fabriqués à partir d'un comprimé à deux couches dans un procédé de frittage, un autre matériau que pour l'élément profilé étant utilisé pour l'appendice.

8. Outil de formage de filet ou taraud selon l'une des revendications 1 à 5, **caractérisé en ce que** l'appendice est formé en tant que pièce indépendante et est joint solidement à l'élément profilé par soudage, brasage ou collage.

9. Outil de formage de filet ou taraud selon l'une des revendications 1 à 8, **caractérisé en ce que** les enfoncements et/ou saillies sont formés par un engrènement à surface plane ou à bord en couronne.
